# EUROPÄISCHE PATENTANMELDUNG

(11) **EP 1 128 649 A2**
(43) Veröffentlichungstag der Anmeldung: **29.08.2001**
(21) Anmeldenummer: 01104264.5
(22) Anmeldetag: 22.02.2001
(51) Int. Cl.: H04M 3/54

(54) **Mitteilung der Vertreter an den rufenden Teilnehmer bei Abwesenheit des gerufenen Teilnehmers**

(30) Priorität: 24.02.2000 DE 10008541
(71) Anmelder: Tenovis GmbH & Co. KG, 60362 Frankfurt am Main (DE)
(72) Erfinder: Vogel, Uwe, 64347 Griesheim (DE)
(74) Vertreter: Böckelen, Rainer

(57) **Zusammenfassung**

Zur Rufumleitung in einem Vermittlungssystem (VE) oder - netz(NE) wird vorgesehen, dass sich ein Teilnehmer (A) vom Vermittlungssystem (VE) oder -netz (NE) abmeldet, wenn er nicht mehr erreichbar ist oder nicht mehr erreichbar sein möchte.

Aufgrund dieser Abmeldung (AM) wird eine individuelle Vertreterregelung (VR) für den abgemeldeten Teilnehmer (A) aktiviert und einem rufenden Teilnehmer (B) mitgeteilt.

## Beschreibung

### Stand der Technik

Die Erfindung geht aus von einem Verfahren zur Rufumleitung innerhalb eines Vermittlungssystems oder -netzes. Das Leistungsmerkmal "Rufumleitung" gibt es in Vermittlungseinrichtungen, z. B. Nebenstellenanlagen, Gatekeepern, und/oder Kommunikationsendeinrichtungen, z. B. Telefone, PCs und/oder beliebigen Netzen, z. B. das öffentliche Telefonnetz PSTN oder das Internet. Mit der Rufumleitung kann ein Teilnehmer für ihn bestimmte Anrufe auf eine andere Kommunikationsendeinrichtung umleiten. Für die Rufumleitung gibt es die Ausprägung "Rufumleitung sofort", "Rufumleitung bei besetzter Gegenstation" und "Rufumleitung bei Nichtbeantwortung innerhalb eines vorgegebenen Zeitfensters". Bei einer solchen Rufumleitung ist oft nicht klar mit welchem Hintergrund sie eingerichtet wurde, d. h. ob sich Teilnehmer A jetzt am Kommunikationsendgerät von Teilnehmer B befindet und damit persönlich erreichbar ist oder der Teilnehmer B den Teilnehmer A vertreten soll, Teilnehmer A folglich persönlich nicht zu erreichen ist.

### Vorteile der Erfindung

Mit den Maßnahmen der Ansprüche 1 oder 14 lässt sich die Vertreterregelung individuell je nach den Bedürfnissen des Teilnehmers gestalten. Abweichend von der eingangs geschilderten Rufumleitung wird durch die Mitteilung der Vertreterregelung an den rufenden Teilnehmer unterscheidbar, ob ein Teilnehmer persönlich erreichbar ist oder nicht. Dem rufenden Teilnehmer kann, z. B. durch Anzeige in seinem Display, mitgeteilt werden, dass der gerufene Teilnehmer persönlich nicht erreichbar ist, sehr wohl aber sein Vertreter. Nun kann der rufende Teilnehmer entscheiden, ob er diesen Vertreter sprechen möchte oder ob er nur mit dem gerufenen Teilnehmer persönlich sprechen möchte und deshalb den Anrufversuch beendet.

Die erfindungsgemäße Mitteilung der Vertreterregelung bei Abwesenheit erspart unnötige Telefonate und damit sowohl dem Anrufer als auch dem Angerufenen letztlich wertvolle Arbeits- oder Freizeit.

In den weiteren Ansprüchen sind vorteilhafte Ausgestaltungen aufgezeigt.

Mit den Maßnahmen nach Anspruch 2 wird eine transparente und eindeutige Vertreterregelung aufrechterhalten bis sich der Teilnehmer wieder anmeldet.

Durch die Ausgestaltung nach Anspruch 3 kann eine beliebige Anrufverteilstrategie festgelegt werden, die im Falle eines Anrufs abgearbeitet wird.

Mit der Ausgestaltung nach Anspruch 4 kann die Vertreterregelung auch ohne Zutun des Teilnehmers automatisch vom Vermittlungssystem aktiviert werden.

Die Ausgestaltung nach Anspruch 5 hat den Vorteil, dass Vertreter nach bestimmten Auswahlkriterien festgelegt werden können, d. h. es können Bedingungen für die Auswahl der/des Vertreter/s festgelegt werden, z. B. zeitlicher Art oder themenbezogen.

Mit den Maßnahmen des Anspruchs 6 entscheidet ein rufender Teilnehmer selbst, ob ein Ruf überhaupt umgeleitet werden soll oder nicht und erspart sowohl sich als auch dem gerufenen Vertreter unnötige Rufe.

Die Maßnahmen des Anspruchs 7 führen zu einer individuellen Vertreterregelung unabhängig von im Vermittlungssystem oder -netz gespeicherten standartisierten Rufumleitungen. Auf diese Weise können Probleme, wie sie bei herkömmlichen Rufumleitungen auftreten, z. B. Rufumleitungsketten, wirksam verhindert werden.

Mit den Maßnahmen nach Anspruch 8 erhält ein potenzieller Vertreter eine Information, dass er als Vertreter ausgewählt wurde.

Anhand vorgenannter Information kann er gemäß Anspruch 9 die Funktion als Vertreter akzeptieren oder ablehnen, z. B. wenn er in Kürze selbst nicht mehr erreichbar sein wird.

Eine abgelehnte Vertreterfunktion wird dem Teilnehmer nach der Ausgestaltung des Anspruchs 10 mitgeteilt, damit er gegebenenfalls einen anderen Vertreter auswählen kann.

Mit der Ausnahmeoption gemäß Anspruch 11 kann der Teilnehmer ganz bestimmte Anrufe selbst annehmen, wohingegen er anderen Anrufern vorspiegelt nicht erreichbar zu sein, um ihre Anrufe gegebenfalls auf einen Vertreter umzuleiten.

Gemäß Anspruch 12 kann als Kriterium für die Vertreterauswahl die Anruferidentität verwendet werden, wodurch der Anrufer z. B. gezielt mit dem für ihn zuständigen Bearbeiter als Vertreter des Gerufenen verbunden wird.

### Zeichnungen

Anhand der Zeichnungen werden Ausführungsbeispiele der Erfindung erläutert. Es zeigen
Figur 1 eine Prinzipdarstellung eines Kommunikationsnetzes in welchem die Erfindung anwendbar ist,
Figur 2 ein Blockschaltbild eines Vermittlungssystems zur Durchführung der erfindungsgemäßen Rufumleitung.

### Beschreibung von Ausführungsbeispielen

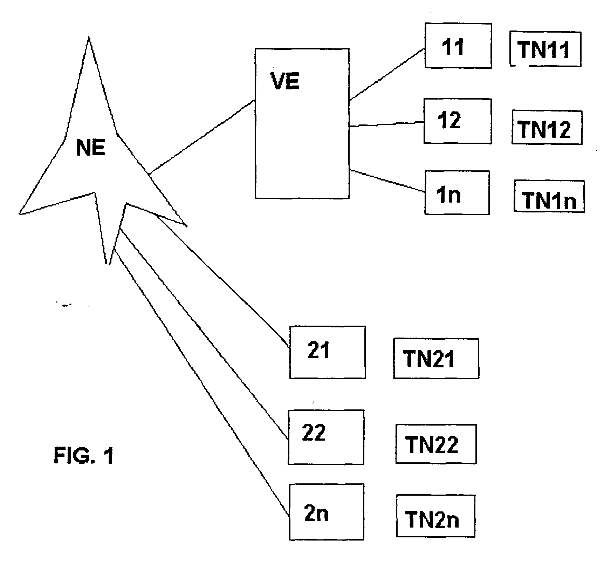

Figur 1 zeigt Kommunikationsendeinrichtungen 11, 12...1n von Teilnehmern TN 11, TN 12...TN1n, die einem Vermittlungssystem VE, z. B. einer privaten Nebenstellenanlage oder einem Gatekeeper, zugeordnet sind. Dieses Vermittlungssystem kann an ein Vermittlungsnetz NE, z. B. das öffentliche Fernsprechnetz PSTN, das Intranet oder das Internet angeschlossen sein. An dieses Netz NE sind wiederrum Kommunikationsendeinrichtungen 21, 22, ...2n weiterer Teilnehmer TN 21, TN 22, ...TN 2n angeschlossen. Teilnehmer aus der Teilnehmergruppe TN 21, TN 22, ...TN 2n können gegebenenfalls mit Teilnehmern aus der Teilnehmergruppe TN 11, TN 12...TN In identisch sein, z. B. wenn sie mehrere Kommunikationsendgeräte besitzen. So kann z. B. ein Telefonapparat eines Teilnehmers zur Kommunikationsendgerätegruppe 11, 12... 1n gehören und sein PC zur Kommunikationsendgerätegruppe 21, 22,...2n oder ein erster Telefonapparat eines Teilnehmers ist an das Vermittlungssystem VE angeschlossen und ein weiterer Telefonapparat dieses Teilnehmers direkt an das öffentliche Telefonnetz NE. Die verschiedenen Telefonapparate eines Teilnehmers können sich darüber hinaus auch noch an verschiedenen Standorten befinden. Bei standardisierten Rufumleitungen könnte es insbesondere bei letzterer Fallgestaltung zu unklaren Zuordnungen für die Rufumleitung kommen. Bei der erfindungsgemäßen Lösung werden definierte und transparente Verhältnisse dadurch erreicht, dass sich ein Teilnehmer beim Vermittlungssystem VE oder dem Vermittlungsnetz NE abmeldet, wenn er nicht mehr erreichbar ist oder nicht mehr erreichbar sein möchte. Aufgrund dieser Abmeldung AM wird dann eine individuelle Vertreterregelung für den abgemeldeten Teilnehmer aktiviert, die einem rufenden Teilnehmer mitgeteilt wird. Diese Mitteilung wird dem rufenden Teilnehmer beispielsweise in seinem Display angezeigt.

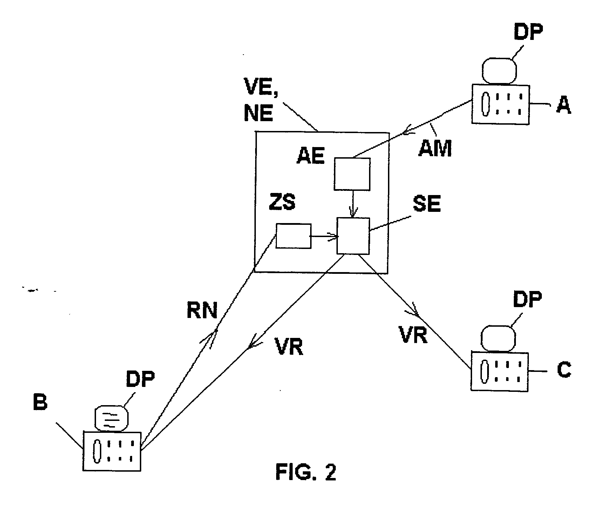

Der rufende Teilnehmer B (Figur 2) bekommt dann mitgeteilt, dass sich der Teilnehmer A abgemeldet hat und persönlich nicht mehr erreichbar ist, sehr wohl aber sein Vertreter C. Nun kann der Teilnehmer B entscheiden, ob er diesen Vertreter C sprechen möchte oder ob er nur mit dem Teilnehmer A persönlich sprechen möchte und deshalb den Anrufversuch beendet. Für die Entgegennahme einer Abmeldung AM ist im Vermittlungssystem VE oder im Vermittlungsnetz NE eine Auswerteeinrichtung AE vorgesehen, die die Abmeldung AM entgegennimmt und daraufhin eine Speichereinrichtung SE aktiviert, in der teilnehmerindividuelle Vertreterregelungen VR für jene Teilnehmer gespeichert sind, die an der erfindungsgemäßen Rufumleitung teilnehmen. Natürlich können auch Teilnehmer an der Vermittlungseinrichtung VE bzw. dem Vermittlungsnetz NE normal weiterbetrieben werden, die die erfindungsgemäße Rufumleitung mit Mitteilung der individuellen Vertreterregelung nicht aufweisen oder beispielsweise nur eine standardisierte Rufumleitung haben.

Die Auswahl der jeweiligen zu dem Teilnehmer gehörigen Vertreterregelung kann beispielsweise durch eine Zugriffssteuerung ZS erfolgt, die die vom rufenden Teilnehmer B gewählte Rufnummer RN des Teilnehmers A auswertet und daraufhin die zu Teilnehmer A gehörige Vertreterregelung VR aus der Speichereinrichtung SE ausliest und dem Teilnehmer B übermittelt zur Anzeige in dessen Display DP.

Die Vertreterregelung VR kann auch vom Vermittlungssystem VE oder -netz NE automatisch aktiviert werden, wenn ein Teilnehmer eine solche Vertreterregelung VR nicht selbst vorgesehen hat. Der Teilnehmer A kann dem Vermittlungssystem VE bzw. dem -netz SE bei der Abmeldung oder auch zuvor eine beliebige Anrufverteilstrategie übermitteln, die im Falle eines Anrufs für Teilnehmer A gemäß dieser Strategie abgearbeitet wird. In der Konsequenz heißt eine aktive Vertreterregelung, dass ein Anruf an den abgemeldeten Teilnehmer niemals zugestellt wird, weil er persönlich nicht erreichbar ist und ein Anruf auf Wunsch einem Vertreter übermittelt wird. Die aktivierte Vertreterregelung bleibt solange bestehen, bis sich der Teilnehmer, der die Vertreterregelung VR eingerichtet hat, wieder anmeldet.

In einer zusätzlichen Ausgestaltung der Erfindung kann das Vermittlungssystem VE bzw. das -netz NE einen potenziellen Vertreter vor dem Einrichten der Vertreterregelung darüber benachrichtigen, dass er jetzt in der Rolle des Vertreters ist und gegebenenfalls dem Vertreter erlauben diese Rolle abzulehnen, was wiederrum dem Einrichtenden gemeldet werden kann und dieser daraufhin eine andere Vertreterregelung treffen kann.

Als Erweiterung kann Teilnehmer A Ausnahmen von der Vertreterregelung VR definieren, d. h. Teilnehmer A will z. B. in einer wichtigen Besprechung nicht gestört werden, erwartet aber einen ganz bestimmten Anruf. Das Vermittlungssystem VE bzw. -netz NE spiegelt allen Anrufern bis auf den/die ausgenommenen Anrufer vor, dass Teilnehmer A nicht erreichbar ist. Die ausgenommenen Anrufer werden hingegen direkt zu Teilnehmer A durgestellt.

Der Teilnehmer kann bei der erfindungsgemäßen Lösung seine Vertreterregelung VR nach beliebigen Kriterien selbst bestimmen inklusive der Ausnahmen von der Vertreterregelung und so nicht auf Probleme, wie z. B. mögliche Rufumleitungsketten, z. B. Teilnehmer A auf Teilnehmer B, Teilnehmer B auf Teilnehmer C usw, stößt.

Ein Beispiel hierzu: Ist der erste Vertreter nicht erreichbar, bekommt der zweite Vertreter den Anruf oder, sofern es zwischen 17:00 und 08:00 Uhr ist der dritte Vertreter. Die Wahl der Kriterien umfasst also nicht nur den Vertreter selbst, sondern auch die Bedingungen, unter denen der jeweilige Vertreter erreichbar wird. Mögliche weitere Bedingungen sind z. B.:
- Rufnummer/-name/Alias/IP-Adresse des Anrufers Teilnehmer B, d. h. je nach Anruferidentität wählt das Vermittlungssystem VE bzw. das -netz NE einen Vertreter aus,
- Zeiträume, d. h. je nach Uhrzeit/Datum wählt das Vermittlungssystem VE bzw. -netz NE einen Vertreter aus,
- Themengebiete, d. h. je nach Anrufthema, das Teilnehmer B z. B. in einer Signalisierungsmeldung beispielsweise über den D-Kanal mitsendet, wählt das Vermittlungssystem VE bzw. -netz NE einen Vertreter aus,
- Erreichbarkeit, d. h. je nachdem welcher Vertreter gerade selbst erreichbar ist, wählt das Vermittlungssystem VE bzw. - netz NE einen Vertreter aus,
- Rufannahme innerhalb einer bestimmten Zeit, d. h. wenn ein Vertreter den Ruf nicht innerhalb einer definierten Zeit annimmt, wählt das Vermittlungssystem VE bzw. -netz NE einen anderen Vertreter aus,
- Ausnahme von der Vertreterregelung, d. h. das Vermittlungssystem VE bzw. -netz NE wählt keinen Vertreter aus, der Ruf wird zu Teilnehmer A durchgestellt,
- beliebige Kombinationen aus vorgenannten Bedingungen.

Die zusätzliche Abwesenheit- und Vertreterinformation erspart unnötige Telefonate und damit sowohl dem Anrufer als auch dem Angerufenen leztlich wertvolle Arbeits- oder Freizeit.

Nach der Erfindung können die Vertreterregelungen VR vorzugsweise über den D-Kanal eines ISDN -Netzes mitübertragen werden. Dadurch entsteht kein zusätzlicher Aufwand und keine Änderung der Hardware.

Nachfolgend wird noch ein konkretes Beispiel der Vertreterregelung VR der Erfindung vorgestellt:
- Teilnehmer B hat Teilnehmer C als ersten und Teilnehmer D als zweiten Vertreter beim Vermittlungssystem VE bzw. - netz NE eingerichtet. Teilnehmer D bekommt den Anruf, wenn Teilnehmer C selbst nicht erreichbar ist oder nach dem fünften Klingeln nicht abhebt,
- Teilnehmer A sitzt am Kommunikationsendgerät 11 und ruft Teilnehmer B am Kommunikationsendgerät 12 an,
- das Vermittlungssystem VE bzw. -netz NE meldet an Teilnehmer A, dass Teilnehmer B persönlich nicht erreichbar ist, aber Teilnehmer C als sein Vertreter eingerichtet ist und fragt, ob ein Anruf dorthin erwünscht ist,
- da es sich um ein fachliches Gespräch handelt, das Teilnehmer A auch mit einem Vertreter führen kann, wählt Teilnehmer A den Anruf zu Teilnehmer C,
- Teilnehmer C wird gerufen, er nimmt aber nicht ab,
- nach fünfmaligem Klingeln wird Teilnehmer A benachrichtigt, dass Teilnehmer C nicht erreichbar ist, aber noch der zweite Vertreter, Teilnehmer D, den Ruf erhalten kann,
- Teilnehmer A wählt den Anruf zu Teilnehmer D, der alternativ auch ohne Rückfrage erfolgen könnte,
- Teilnehmer D nimmt den Ruf an.

Zur Rufumleitung in einem Vermittlungssystem (VE) oder - netz(NE) wird vorgesehen, dass sich ein Teilnehmer (A) vom Vermittlungssystem (VE) oder -netz (NE) abmeldet, wenn er nicht mehr erreichbar ist oder nicht mehr erreichbar sein möchte.

Aufgrund dieser Abmeldung (AM) wird eine individuelle Vertreterregelung (VR) für den abgemeldeten Teilnehmer (A) aktiviert und einem rufenden Teilnehmer (B) mitgeteilt.

## Patentansprüche

1. Verfahren zur Rufumleitung innerhalb eines Vermittlunssystems oder -netzes mit folgenden Schritten:
- ein Teilnehmer (A) meldet sich beim Vermittlungssystem (VE) oder -netz (NE) ab, wenn er nicht mehr erreichbar ist oder nicht mehr erreichbar sein möchte,
- aufgrund dieser Abmeldung (AM) wird eine individuelle Vertreterregelung (VR) für den abgemeldeten Teilnehmer (A) aktiviert und einem rufenden Teilnehmer (B) mitgeteilt.

2. Verfahren nach Anspruch 1, dadurch gekennzeichnet, dass die Vertreterregelung (VR) solange aktiviert bleibt, bis sich der abgemeldete Teilnehmer (A) beim Vermittlungssystem (VE) oder -netz (NE) wieder anmeldet.

3. Verfahren nach Anspruch 1 oder 2, dadurch gekennzeichnet, dass die Vertreterregelung (VR) vorab von einem Teilnehmer festgelegt wird.

4. Verfahren nach Anspruch 1 oder 2, dadurch gekennzeichnet, dass die Vertreterregelung (VR) vom Vermittlungssystem oder -netz (VE, NE) festgelegt wird.

5. Verfahren nach einem der Ansprüche 1 bis 4, dadurch gekennzeichnet, dass ein Teilnehmer die Vertreterregelung (VR) nach beliebigen Auswahlkriterien selbst festlegt.

6. Verfahren nach einem der Ansprüche 1 bis 5, dadurch gekennzeichnet, dass der rufende Teilnehmer (B) aufgrund der Vertreterregelung (VR) selbst entscheidet, ob der Ruf zum Vertreter (C, D) umgeleitet wird oder nicht.

7. Verfahren nach einem der Ansprüche 3 bis 6, dadurch gekennzeichnet, dass die Vertreterregelung (VR) vom Teilnehmer unabhängig von insbesondere im Vermittlungssystem (VE) oder -netz (NE) gespeicherterten standardisierten Rufumleitungen nach individuellen Kriterien festgelegt wird.

8. Verfahren nach einem der Ansprüche 1 bis 7, dadurch gekennzeichnet, dass insbesondere vor der Aktivierung der Vertreterregelung (VR) ein in die Vertreterregelung einbezogener potenzieller Vertreter eine Benachrichtigung über die Tatsache erhält, dass er als Vertreter ausgewählt wurde.

9. Verfahren nach Anspruch 8, dadurch gekennzeichnet, dass der in die Vertreterregelung (VR) einbezogene potenzielle Vertreter (C, D) aufgrund der Benachrichtigung entscheiden kann, ob er die Funktion des Vertreters akzeptiert oder ablehnt.

10. Verfahren nach Anspruch 9, dadurch gekennzeichnet, dass der potenzielle Vertreter (C, D) insbesondere bei Ablehnung der Vertreterfunktion den Teilnehmer (A), der die Vertreterregelung (VR) aktivieren möchte, von der Ablehnung informiert, damit letzterer eine andere Vertreterregelung treffen kann.

11. Verfahren nach einem der Ansprüche 1 bis 10, dadurch gekennzeichnet, dass der Teilnehmer, der die Vertreterregelung (VR) einrichtet, Ausnahmen von der Vertreterregelung definiert, um im Ausnahmefall insbesondere bestimmte Anrufe direkt an sich weitergeleitet zu bekommen.

12. Verfahren nach einem der Ansprüche 1 bis 11, dadurch gekennzeichnet, dass das Vermittlungssystem (VR) bzw. -netz (NE) je nach Anruferidentität einen Vertreter auswählt.

13. Verfahren nach einem der Ansprüche 1 bis 12, dadurch gekennzeichnet, dass die Mitteilung über die Vertreterregelung (VR) über den D-Kanal im ISDN übertragen wird.

14. Anordnung zur Rufumleitung innerhalb eines Vermittlungssystems (VR) oder -netzes (NE), wobei das Vermittlungssystem oder -netz folgendermaßen ausgebildet ist:
- das Vermittlungssystem (VE) oder -netz (NE) ist ausgebildet, Abmeldungen (AM) von Teilnehmern entgegenzunehmen,
- das Vermittlungssystem oder -netz besitzt eine Speichereinrichtung (SE) für Teilnehmer individuelle Vertreterregelungen (VR),
- das Vermittlungssystem oder -netz ist ausgebildet eine teilnehmerindividuelle Vertreterregelung (VR) bei Entgegennahme einer Abmeldung (AM) zu aktivieren und dem rufenden Teilnehmer mitzuteilen.
